# EUROPEAN PATENT SPECIFICATION

(11) **EP 4 086 833 B1**
(45) Date of publication and mention of the grant of the patent: **21.10.2026**
(21) Application number: 21738748.9
(22) Date of filing: 07.01.2021
(51) Int. Cl.: G06Q 20/32, G06Q 20/38, G06Q 20/40

(54) **METHOD AND DEVICE FOR PROCESSING PAYMENT INFORMATION, WEARABLE APPARATUS, AND COMPUTER READABLE STORAGE MEDIUM**
VERFAHREN UND VORRICHTUNG ZUR VERARBEITUNG VON ZAHLUNGSINFORMATIONEN, AM KÖRPER TRAGBARES GERÄT UND COMPUTERLESBARES SPEICHERMEDIUM
PROCÉDÉ ET DISPOSITIF DE TRAITEMENT D'INFORMATIONS DE PAIEMENT, APPAREIL VESTIMENTAIRE ET SUPPORT DE STOCKAGE LISIBLE PAR ORDINATEUR

(30) Priority: 07.01.2020 CN 202010015233
(43) Date of publication of application: 09.11.2022
(73) Proprietor: GUANGDONG OPPO MOBILE TELECOMMUNICATIONS CORP., LTD., Dongguan, Guangdong 523860 (CN)
(72) Inventor: LIU, Enfu, Dongguan, Guangdong 523860 (CN)
(74) Representative: Mewburn Ellis LLP
(86) International application number: PCT/CN2021/070551
(87) International publication number: WO 2021/139703

(56) References cited:
- CN-A- 103 413 089
- CN-A- 103 426 084
- CN-A- 104 378 795
- CN-A- 106 527 673
- CN-A- 106 875 186
- CN-A- 107 491 966
- CN-A- 108 053 205
- CN-A- 110 505 350
- US-A1- 2017 075 316
- US-A1- 2017 076 284
- US-A1- 2019 122 202
- US-A1- 2019 340 601

## Description

### TECHNICAL FIELD

This disclosure relates to the field of electronic payment technology, and in particular, to a payment information processing method and apparatus, a wearable device, and a computer-readable storage medium.

### BACKGROUND

With the development of electronic payment technology, it is increasingly common to generate or scan payment identification codes such as QR codes and barcodes through smart devices. At present, some wearable device manufacturers integrate a mobile payment function in wearable devices. For example, when a payment request is received, a payment identification code can be generated for payment, or payment can be completed through a connected mobile terminal.

However, in related art, the mobile payment function of wearable devices often relies on connections with wireless networks or mobile terminal. In application scenarios such as being unable to connect with wireless networks or mobile terminals, or a network signal is weak, the wearable device is unable to provide the convenient payment function.
US2019340601A1 relates to methods for transmitting data by using a barcode. One example method includes receiving a mobile payment instruction, determining, by a mobile device, whether mobile payment information exists, where the mobile payment information is discount information of a mobile payment application, determining, based on the discount information, an application for performing mobile payment, determining, whether a particular light ray emitted by a scanner of a payment terminal is shining on the mobile device, in response to determining that the particular light ray is shining on the mobile device, invoking, a barcode that is used by the application program for mobile payment, displaying the barcode on a display of the mobile device, receiving a payment success message, and displaying a payment success user interface on the display.
CN110505350 A relates to a terminal operation control method and device and a terminal, and belongs to the technical field of terminal control. The method enables the terminal to activate the pre-stored electric quantity of the terminal after receiving an emergency state activation instruction by setting an emergency state so as to start an emergency operation mode according to the emergency stateactivation instruction and the pre-stored electric quantity, wherein the emergency operation mode only displays preset information content and only operates preset function items. Even if the mobile phone is powered off due to power shortage, payment and collection can be completed by activating the emergency operation mode and displaying the preset information content. The technical problem that collection and payment behaviors cannot be completed due to the fact that a mobile phone is powered off due to lack of electricity in the prior art is solved.

### SUMMARY

The invention is set out in the appended claims. A payment information processing method and apparatus, a wearable device, and a computer-readable storage medium are provided in implementations of the present disclosure, which can provide a convenient payment function in different application scenarios.

A payment information processing method is performed by a wearable device, the wearable device includes a first system and a second system, security of the second system is higher than security of the first system, and the method includes the following.

A payment identification code is obtained through the first system when the wearable device is in a network connection state. The payment identification code is transmitted to the second system and the payment identification code is stored through the second system. When the wearable device meets a preset condition and receives a payment request, the stored payment identification code is obtained from the second system. The payment identification code is displayed.
A wearable device includes a memory, a first processor, and a second processor. The memory is configured to store a first computer program which, when executed by the first processor, is configured to cause the wearable device to operate a first system and store a second computer program which, when executed by the second processor, is configured to cause the wearable device to operate a second system, and the wearable device is configured to implement following operations.

A payment identification code is generated through the first system when the wearable device is in a network connection state. The payment identification code is transmitted to the second system and the payment identification code is stored through the second system. When the wearable device meets a preset condition and receives a payment request, the stored payment identification code is obtained from the second system. The payment identification code is displayed.

A computer-readable storage medium stores a computer program executed by a processor to implement following operations.

A payment identification code is generated through the first system when a wearable device is in a network connection state. The payment identification code is transmitted to a second system and the payment identification code is stored through the second system. When the wearable device meets a preset condition and receives a payment request, the stored payment identification code is obtained from the second system. The payment identification code is displayed.

With the above payment information processing method and apparatus, the wearable device, and the computer-readable storage medium, when the wearable device is in a network connection state, a payment identification code is generated through the first system and transmitted to a second system. The second system stores the payment identification code. When the wearable device meets a preset condition and receives a payment request, the stored payment identification code is obtained from the second system and displayed. In other words, the payment identification code can be generated through the first system in advance and stored in the second system. When the payment request is received under the preset condition, the stored payment identification code can be obtained from the second system for payment. As such, a convenient payment function can be achieved in application scenarios such as being unable to connect with wireless networks or mobile terminals, or a network signal is weak, and security of payment information can be ensured.

Details of one or more implementations of the disclosure are set forth in accompanying drawings and descriptions below. Other features, objects, and advantages of the present disclosure will become apparent from the descriptions, the accompanying drawings, and claims.

### BRIEF DESCRIPTION OF THE DRAWINGS

To describe technical solutions in implementations of the present disclosure or in the related art more clearly, the following briefly introduces accompanying drawings required for illustrating the implementations. Apparently, the accompanying drawings in the following description illustrate some implementations of the present disclosure. Those of ordinary skill in the art may also obtain other drawings based on these accompanying drawings without creative efforts.
FIG. 1 is a schematic diagram of an internal structure of a wearable device provided in an implementation.
FIG. 2 is a flow chart of a payment information processing method provided in an implementation.
FIG. 3 is a flow chart of a payment information processing method provided in another implementation.
FIG. 4 is a flow chart of a payment information processing method provided in another implementation.
FIG. 5 is a schematic diagram of a function control system of a wearable device provided in an implementation.
FIG. 6 is a flow chart of a payment information processing method provided in another implementation.
FIG. 7 is a schematic structural diagram of a payment information processing apparatus provided in an implementation.

### DETAILED DESCRIPTION

In order to make objectives, technical solutions, and advantages of the present disclosure more clear, the present disclosure will be further described in detail below with reference to accompanying drawings and implementations. It should be understood that specific implementations are described herein for the purpose of explaining the disclosure rather than limiting the disclosure
It can be understood that, the terms "first", "second", etc., may be used herein to describe various elements and parameters, but these elements and parameters are not limited by these terms. For example, these terms may be used to distinguish a first element from another element. For example, a first system could be referred to as a second system, and, similarly, a second system could be referred to as a first system, without departing from the protection scope of the disclosure. Both the first system and the second system are systems, but they are not the same system.

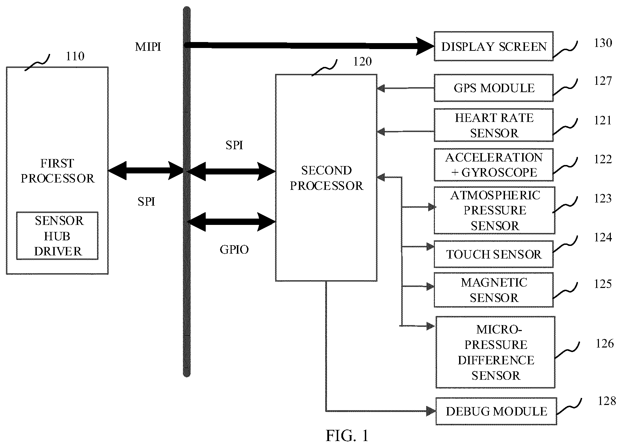

FIG. 1 is a schematic diagram of an internal structure of a wearable device provided in an implementation. As illustrated in FIG. 1, in one implementation, the provided wearable device includes a first processor 110 corresponding to the first system and a second processor 120 corresponding to the second system. Both the first processor 110 and the second processor 120 are microprocessors, where the first processor 110 is a core processor. The first processor 110 and the second processor 120 may be configured as corresponding microprocessors according to actual applications, and the first processor 110 and the second processor 120 are not limited herein. For example, the first processor 110 may be a central process unit (CPU) processor, and the corresponding first system may be an Android system; and the second processor 120 may be a microcontroller unit (MCU) processor, and the corresponding second system may be a real time operating system (RTOS) system.

Specifically, the wearable device may include one or more of: a heart rate sensor 121, an acceleration + gyroscope 122, an atmospheric pressure sensor 123, a touch sensor 124, a magnetic sensor 125, a micro-pressure difference sensor 126, or other sensors. The second processor 120 can be connected with sensors of the wearable device for obtaining data collected by the sensors. The second processor 120 can also be connected with a global positioning system (GPS) module 127 for obtaining positioning data received by a GPS antenna; and connected with a debug module 128 for outputting debug data of the wearable device.

The first processor 110 and the second processor 120 are connected through a serial peripheral interface (SPI), so that the first system and the second system can transmit communication data through the SPI bus. The display screen 130 is connected with the first processor 110 and the second processor 120 through a mobile industry processor interface (MIPI), and can display data output by the first processor 110 or the second processor 120. The first processor 110 also includes a sensor hub driver, which can be used to drive data collection and data processing of each sensor.

In one implementation, the wearable device can be operable in at least two working modes: a watch mode and a wristband mode. When the wearable device is in the watch mode, both the first system and the second system run, and the wearable device is under control of the first system. When the wearable device is in the bracelet mode, the first system is shut down, the second system runs, and the wearable device is under control of the second system.

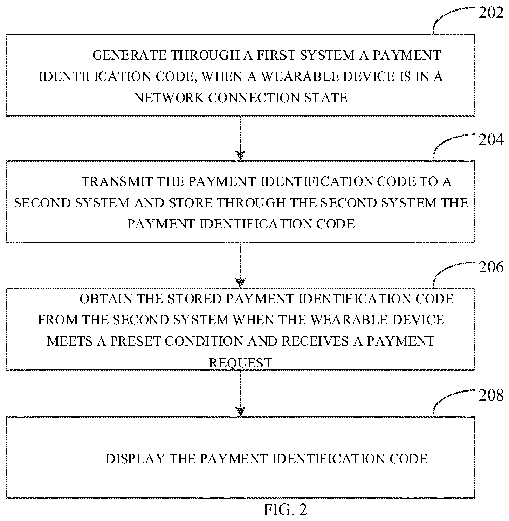

FIG. 2 is a flow chart of a payment information processing method provided in an implementation. As illustrated in FIG. 2, in one implementation, for illustrative purpose, the payment information processing method is applicable to a wearable device, and the payment information processing method includes the following.

Step 202, when the wearable device is in a network connection state, a payment identification code is generated through the first system.

It can be understood that the first system has a network connection function and therefore can generate the payment identification code when the first system is connected with a network. The payment identification code generated here is not limited to one code, and more than one payment identification code can be generated, and the specific number is related to usage time and storage space. For example, the specific number can be set to 10, 15, 20, etc. The second system does not have the network connection function and is more secure. In one case, both the first system and the second system run, and the first system can be connected with a network; in another case, the first system does not run, and only the second system runs, and therefore the network cannot be connected; and of course in other cases, the second system may not run while the first system runs, which can be set according to actual application requirements.

It should be noted that the payment identification code refers to an identification code used to provide a payment entry. The payment identification code may be a barcode, a QR code, or the like.

In the implementation of the present disclosure, the wearable device can connect with the network through the first system to generate the payment identification code through the first system when the first system is running. Specifically, the wearable device is connected with a payment platform through the first system for network communication. In the network connection state, through the first system, the wearable device can obtain account information of the wearable device from the payment platform (such as Alipay^{™}, WeChat^{™}, etc.), and generate the payment identification code according to the account information. Optionally, the wearable device can also obtain the payment identification code generated by the payment platform through the first system.

Step 204, the payment identification code is transmitted to the second system and the payment identification code is stored through the second system.

Security of the second system is higher than that of the first system. Specifically, the first system is equivalent to a main operating system of the wearable device and can provide relatively complete functions of the wearable device, for example, high-speed data transmission with a connected mobile terminal, detection and analysis of biological data, accurate positioning, communication, etc. can be realized through the first system. The second system is equivalent to an auxiliary operating system of the wearable device, which can provide basic functions of the wearable device, such as time display, information reminder, sensor data collection, and low-speed data transmission with a connected mobile terminal, etc.

The wearable device can transmit the generated payment identification to the second system, and the second system stores the payment identification code, which can ensure security of the payment identification code.

Step 206, when the wearable device meets a preset condition and receives a payment request, the stored payment identification code is obtained from the second system.

The wearable device may obtain the stored payment identification code from the second system when the preset condition is met and the payment request is received. Specifically, the wearable device may obtain at least one of network information and power information of the wearable device upon receiving the payment request, and when the wearable device is determined to meet the preset condition according to at least one of the network information and the power information, the stored payment identification code is obtained from the second system. The network information includes a network status and a network signal strength, and the power information includes remaining power. According to different preset conditions, the wearable device may obtain the at least one of network information and power information of the wearable device to determine whether the preset condition is met. For example, when the preset condition is that the wearable device is in an offline state, the wearable device may obtain the network information to determine whether the preset condition is met.

The preset condition includes at least one of: the wearable device is in an offline state, a network signal strength of the wearable device is less than a preset value, or remaining power of the wearable device is less than a first preset power threshold. For example, the preset condition may further include that the wearable device is under control of the second system, or the wearable device is not connected with a mobile terminal, and the like. For example, the preset condition may be that the wearable device is in the offline state, then the wearable device may obtain the stored payment identification code from the second system when the wearable device is determined to be in the offline state and receives the payment request. The preset condition may also be that network signal strength of the wearable device is less than the preset value, and the remaining power of the wearable device is less than the first preset power threshold, then when the wearable device receives the payment request, whether the wearable device meets the following condition is determined: whether the network signal strength is less than the preset value and whether the remaining power is less than the first preset power threshold value. If the network signal strength is less than the preset value and the remaining power is less than the first preset power threshold value, the stored payment identification code is obtained from the second system.

It can be understood that the offline state refers to a state in which the wearable device has not established a connection with a wireless access point and is unable to realize a wireless communication function. When the network signal strength is less than the preset value, the payment identification code is generated too slowly or difficult to be generated. When the remaining power is less than the first preset power threshold, it indicates that the power is too low, if the first system continues to be used and the payment code is obtained from Internet, more power will be consumed. Therefore, in the above-mentioned situations, it is more appropriate to obtain the payment identification code pre-stored in the second system for payment. Of course, the offline state also includes a situation where the wearable device is currently under control of the second system, that is, only the second system is running, and then the payment code in the second system can be directly used without switching to the first system at this time. In addition, the payment request may be generated by pressing a button of the wearable device by the user, or may be generated by the user touching a control on the touch screen of the wearable device, etc. The wearable device may obtain and generate the payment request.

Step 208, the payment identification code is displayed.

The wearable device can display the obtained payment identification code on the display screen. The displayed payment identification code can be scanned by other devices, so that the other devices can obtain the payment entry of the account information corresponding to the wearable device, and complete a corresponding collection operation.

In implementations of the present disclosure, when the wearable device is in the network connection state, the payment identification code is generated through the first system and transmitted to the second system. The second system stores the payment identification code. When the wearable device meets the preset condition and receives the payment request, the stored payment identification code is obtained from the second system and displayed. In other words, the payment identification code can be generated through the first system in advance and stored in the second system. When the payment request is received in scenarios such as offline, weak network signal, low power, etc., the stored payment identification code can be obtained from the second system for payment. As such, a convenient payment function can be achieved in different application scenarios, and security of payment information can be ensured.

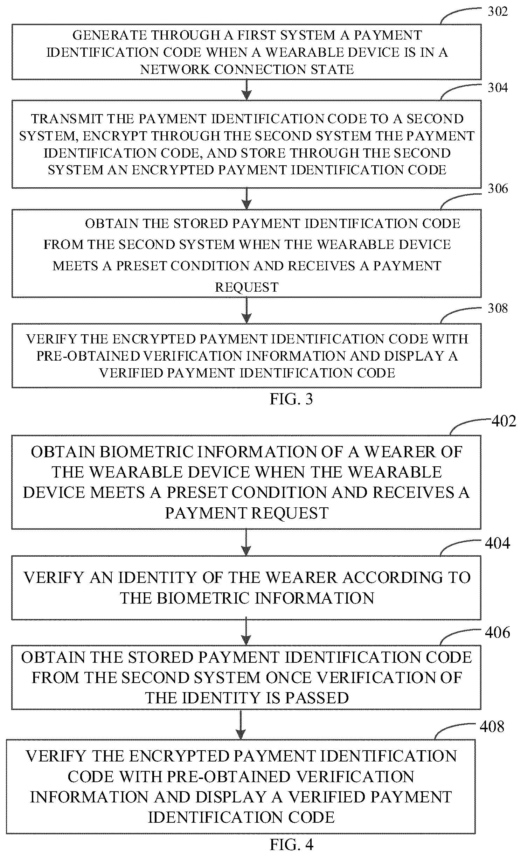

FIG. 3 is a flow chart of a payment information processing method provided in another implementation. As illustrated in FIG. 3, in one implementation, the payment information processing method includes the following.

Step 302, when the wearable device is in a network connection state, a payment identification code is generated through the first system.

Step 304: the payment identification code is transmitted to the second system, the payment identification code is encrypted through the second system, and an encrypted payment identification code is stored through the second system.

The wearable device transmits the payment identification code generated through the first system to the second system, the payment identification code is encrypted through the second system, and the encrypted payment identification code is stored through the second system.

In one implementation, the second system may use an asymmetric encryption algorithm to encrypt the payment identification code. A pair of keys are required for the asymmetric encryption algorithm, that is, a public key and a private key. The private key can deduce the public key, but the public key is unable to deduce the private key. Data encrypted with the public key can only be decrypted with the corresponding private key; and data encrypted with the private key can only be decrypted with the corresponding public key. Specifically, the wearable device can generate a pair of private key and public key through the second system, so as to use the private key to encrypt the payment identification code and transmit the public key corresponding to the private key to the first system.

Step 306, when the wearable device meets a preset condition and receives a payment request, the stored payment identification code is obtained from the second system.

Step 308, the encrypted payment identification code is verified with pre-obtained verification information, and a verified payment identification code is displayed.

The pre-obtained verification information is corresponding to encrypted information, and can be used to verify the payment identification code. The wearable device can verify the encrypted payment identification code with the pre-obtained verification information.

In one implementation, the pre-obtained verification information is the public key corresponding to the private key with which the payment identification code is encrypted. The payment identification code can be decrypted according to the public key. If decryption is successful, the payment identification code is verified, and the verified payment identification code is displayed; if the decryption is unsuccessful, the payment identification code is not verified. Optionally, when the payment identification code is not verified, the wearable device may re-obtain other stored payment identification codes from the second system.

In one implementation, in the payment information processing method provided, the payment identification code can also be encrypted through the first system. Specifically, the first system can generate a pair of a private key and a public key, and transmit the public key to the second system; when the first system generates the payment identification code, the first system encrypts the payment identification code according to the generated private key, and transmits an encrypted payment identification code to the second system to be stored through the second system; when the first system receives the payment request, the first system obtains the encrypted payment identification code from the second system, and determines the public key according to the held private key, and verifies the encrypted payment identification code; and when the second system receives the payment request, the second system can obtain the stored encrypted payment identification code, and verify the payment identification code according to the public key transmitted through the first system.

When receiving the payment identification code transmitted through the first system, the second system encrypts the payment identification code and stores the encrypted payment identification code. When a payment request is received, the stored encrypted payment identification code can be obtained, and the encrypted payment identification code is verified according to the pre-obtained verification information, and the verified payment identification code is displayed, which can improve the security of the payment information.

FIG. 4 is a flow chart of a payment information processing method provided in another implementation. As illustrated in FIG. 4, in one implementation, the provided payment information processing method includes the following.

Step 402, when the wearable device meets a preset condition and receives a payment request, biometric information of a wearer of a wearable device is obtained.

The biometric information may be, but is not limited to, one or more of: fingerprint information, heart rate information, blood pressure information, face information, iris information, or the like of the wearer. The biometric information can be used to verify an identity of the wearer. When the wearable device is worn, the wearable device can obtain the biometric information of the wearer through a built-in sensor.

When the wearable device meets the preset condition and receives the payment request, the wearable device can obtain the biometric information of the wearer.

Step 404, the identity of the wearer is verified according to the biometric information.

The wearable device verifies the identity of the wearer according to the biometric information. Specifically, the wearable device has pre-stored biometric information of the owner of the wearable device. By comparing the biometric information of the owner with the biometric information of the wearer, it can be verified whether the wearer is the owner of the wearable device.

The biometric information of the owner may be entered into the wearable device in advance by the owner, or detected by the wearable device when the owner wears the wearable device. The owner of the wearable device can be one or more.

Step 406, the stored payment identification code is obtained from the second system once verification of the identity is passed.

When the verification of the identity is passed, it indicates that the current wearer is the owner of the wearable device, and the wearable device can obtain the stored payment identification code from the second system according to the obtained payment request. When the verification of the identity fails to be passed, it indicates the wearer is not the owner of the wearable device, and the wearable device may prompt no payment permission.

Step 408, the payment identification code is displayed.

The biometric information of the wearer is obtained when the payment request is received, the identity of the wearer is verified according to the biometric information, and the stored payment identification code is obtained and displayed when the verification is passed, as such, security of payment can be further improved.

In some implementations, in the provided payment information processing method, the payment identification code is generated through the first system when the wearable device is in the network connection state as follows. When the wearable device is in the network connection state, a current moment is obtained; and at least one payment identification code is generated through the first system when the current moment belongs to a preset time period.

The preset time period may be a period in which the wearable device is operated less frequently. For example, the preset time period may be 0:00-1:00; 5:00-6:00; 23:00-23:30, etc. When a current system of the wearable device is the first system and the current moment is within the preset time period, the wearable device can generate the at least one payment identification code through the first system. The number of payment identification codes generated by the wearable device can be set according to actual application requirements, which is not set here, for example, it may be 5, 10, 20, etc.

The network connection state means that the wearable device is connected with a wireless access point, and can wirelessly communicate with a server or a mobile terminal through a wireless network. The wearable device can determine whether the wearable device is in an offline state or a network connection state according to a current network state.

In some implementations, when the wearable device is in the network connection state, at least one payment identification code is generated through the first system according to a preset time interval. For example, the wearable device can obtain the network state of the wearable device, and when the network state is the network connection state, the at least one payment identification code is generated according to the preset time interval to update payment identification codes in the second system. The preset time interval may be set according to valid time of a payment identification code. Specifically, the preset time interval is less than or equal to the valid time of the payment identification code. For example, when the valid time of the payment identification code is 60 minutes, the preset time interval may be 30 minutes, 40 minutes, 50 minutes, 60 minutes, or the like.

In some implementations, when the number of unused payment identification codes stored through the second system is less than a preset number and the wearable device is in the network connection state, at least one payment identification code is generated through the first system. Specifically, the wearable device can also obtain through the first system the number of unused payment identification codes stored through the second system, and when the number is less than the preset number and the wearable device is in the network connection state, proceed to generating the payment identification code through the first system. The preset number may be 5, 8, 10, or the like. Different settings of the preset number will lead to different effects. Assuming that the second system stores 20 payment identification codes, when the preset number is set to 10, specifically, each time the network is connected, a number detection is performed. When the number of unused payment identification codes is less than 10, an update is performed. The update may be an update of all payment identification codes, that is, to clear the unused payment identification codes in the second system, and generate 20 payment identification codes through the first system. The update may also be an update of used payment identification code, that is, to generate the same number of payment identification codes as the used payment identification codes through the first system. This method can update stored payment identification codes in real time.

Further, when the preset number is set to 1, that is, when all payment identification codes stored in the second system are used up and the wearable device is in the network connection state, at least one payment identification code is generated through the first system. For example, if the number of all payment identification codes stored in the second system is 10, and when all 10 payment identification codes are used up, update at once, that is, the payment identification codes are generated through the first system. Use of a payment identification code means that the wearable device obtains the payment identification code from the second system and displays it, that is, when the payment identification code is displayed, it is considered that the payment identification code has been used. The wearable device can set a displayed payment identification code as an invalid payment identification code in order to avoid repeated use, and the invalid payment identification code can no longer be displayed.

Optionally, the wearable device can obtain the payment identification code from the second system according to generation time of the payment identification code. For example, the wearable device can preferentially obtain the payment identification code whose generation time is the longest from the current moment, that is, use an old one first.

The payment identification code is generated through the first system when the current moment is within the preset time period, and transmitted to the second system for storage, which can avoid affecting other operations of the wearable device and ensure operation stability of the wearable device. By setting the preset time interval, validity of the payment identification code can be guaranteed, and by setting factors such as a usage number, the payment identification code can be updated in time for use.

In one implementation, the provided payment information processing method further includes: when the wearable device is in the network connection state and receives a payment request, a payment identification code is generated through the first system, and the payment identification code is displayed.

When the wearable device is in the network connection state, the wearable device has a function of generating the payment identification code through the first system. Therefore, when the wearable device is in the network connection state and receives the payment request, the payment identification code can be generated through the first system and displayed.

In one implementation, the payment information processing method further includes: when the wearable device is under control of the first system, remaining power of the wearable device is obtained; when the remaining power is less than a second preset power threshold, shut down the first system of the wearable device and switch to be under control of the second system; when the wearable device is under control of the second system and a payment request is received, the stored payment identification code is obtained through the second system, and the payment identification code is displayed.

The remaining power of the wearable device refers to a proportion of available power in the battery of the wearable device to a nominal capacity. The second power threshold may be determined according to actual usage requirements. For example, the second power threshold may be 10%, 15%, 20%, 30%, etc. but not limited thereto. The first system can provide relatively complete functions of the wearable device, and the second system provides basic functions of the wearable device, so power consumption of the wearable device operating the first system is greater than power consumption of the wearable device operating the second system. The wearable device can detect the remaining power in real time, and when the remaining power is less than a power threshold, shut down the first system of the wearable device and switch to be under control of the second system.

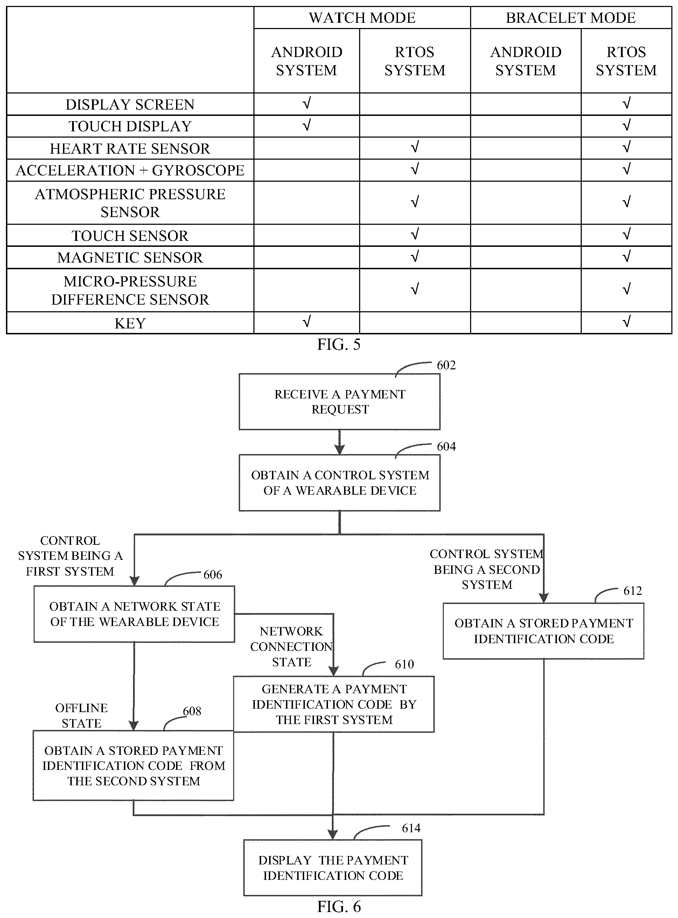

FIG. 5 is a schematic diagram of a function control system of a wearable device provided in an implementation. As illustrated in FIG. 5, for illustrative purpose, the first system is an Android system, and the second system is an RTOS system, the wearable device is operable in at least two operating modes, for example, a watch mode and a bracelet mode, the wearable device operates both the Android system and the RTOS system in the watch mode, the wearable device shuts down the Android system and only operates the RTOS system in the bracelet mode. A heart rate sensor, an electrocardiograph (ECG) sensor, a motion sensor, and other sensors are under control of the RTOS system in the watch mode and in the bracelet mode. A display screen, a touch screen, and a key can be controlled by different systems in different modes, that is, in the watch mode, the display, the touch screen, and the key can be controlled by the Android system, and in bracelet mode, the display, the touch screen, and the key can be controlled by the RTOS system.

When the wearable device is under control of the first system, the payment request input by the user can be obtained through the touch screen or the key; when the first system is shut down and the wearable device is under control of the second system, the payment request input by the user can also be obtained through the touch screen or the key.

When the wearable device is under control of the second system, the payment request can be obtained through the second system, the stored payment identification code can be obtained according to the payment request, and the payment identification code can be displayed. The stored payment identification code is a payment identification code generated through the first system and transmitted to the second system when the wearable device is in the network connection state.

When the wearable device is under control of the first system, the remaining power of the wearable device is obtained. When the remaining power is less than the second preset power threshold, shut down the first system of the wearable device and switch to be under control of the second system; when the wearable device is under control of the second system and receives the payment request, the stored payment identification code is obtained through the second system, and the payment identification code is displayed, which can realize a payment function in a low power consumption mode and ensure security of payment.

In one implementation, the processor corresponding to the first system and the processor corresponding to the second system are connected through a serial peripheral interface (SPI) bus. In the payment information processing method, the payment identification code is transmitted to the second system and the payment identification code is stored through the second system as follows. The payment identification code is transmitted to the processor corresponding to the second system through the SPI bus; and the payment identification code is stored by a memory corresponding to the second system.

The processor corresponding to the first system and the processor corresponding to the second system are connected through the SPI bus. For example, the processor corresponding to first system is a CPU processor, the processor corresponding to the second system is a MCU processor, and the CPU processor and the MCU processor can be connected through the SPI bus and perform data transmission through the SPI bus.

In this implementation, the wearable device can transmit the payment identification code generated through the first system to the second system through the SPI bus to be stored in the memory of the processor corresponding to the second system. Optionally, the memory may be a flash memory or other non-volatile memory, which is not limited herein.

FIG. 6 is a flow chart of a payment information processing method provided in another implementation. As illustrated in FIG. 6, in the payment information processing method, for illustrative purpose, the preset condition is that the wearable device is in an offline state, the method includes the following.

Step 602, a payment request is received.

Step 604, a control system of the wearable device is obtained; if the control system is the first system, proceed to step 606; if the control system is the second system, proceed to step 612.

Step 606, a network state of the wearable device is obtained; when the network state is the offline state, proceed to step 608; when the network state is a network connection state, proceed to step 610.

Step 608, a stored payment identification code is obtained from the second system, and proceed to step 614.

Step 610, a payment identification code is generated through the first system, and proceed to step 614.

Step 612, the stored payment identification code is obtained.

Step 614, the payment identification code is displayed.

It should be understood that although steps in the flowcharts of FIGS. 2-4 and 6 are sequentially displayed according to arrows, these steps are not necessarily executed in the order indicated by the arrows. Unless explicitly stated herein, the execution of these steps is not strictly limited to the order, and these steps may be performed in other orders. Moreover, at least a part of steps in FIGS. 2-4 and6 may include multiple sub-steps or multiple stages. These sub-steps or stages are not necessarily completed at the same time, but may be executed at different times. These sub-steps or stages are not necessarily executed sequentially, but may be executed alternately with at least a portion of other steps, or sub-steps or stages of other steps.

These sub-steps are not necessarily at the same time. Alternatively, the order of execution of the stages is not necessarily sequential, but may be performed alternately or alternately with other steps or sub-steps of other steps or at least a portion of a stage.

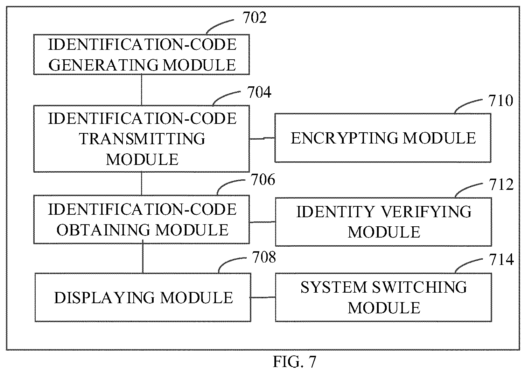

FIG. 7 is a schematic structural diagram of a payment information processing apparatus provided in an implementation. As illustrated in FIG. 7, the payment information processing apparatus includes an identification-code generating module 702, an identification-code transmitting module 704, an identification-code obtaining module 706, and a displaying module 708.

The identification-code generating module 702 is configured to generate through the first system a payment identification code when a wearable device is in a network connection state.

The identification-code transmitting module 704 is configured to transmit the payment identification code to a second system and store through the second system the payment identification code.

The identification-code obtaining module 706 is configured to obtain the stored payment identification code from the second system when the wearable device meets a preset condition and receives a payment request.

The displaying module 708 is configured to display the payment identification code.

With the payment information processing apparatus provided in implementations, when the wearable device is in the network connection state, the payment identification code is generated through the first system and transmitted to the second system. The second system stores the payment identification code. When the wearable device meets the preset condition and receives the payment request, the stored payment identification code is obtained from the second system and displayed. In other words, the payment identification code can be generated through the first system in advance and stored in the second system. When the payment request is received under the preset condition, the stored payment identification code can be obtained from the second system for payment. As such, a convenient payment function can be achieved in different application scenarios such as being unable to connect with wireless networks or mobile terminals, or a network signal is weak, and security of payment information can be ensured.

In an implementation, the payment information processing apparatus further includes an encrypting module 710. The encrypting module 710 is configured to encrypt through the second system the payment identification code and store through the second system an encrypted payment identification code; the identification-code obtaining module 706 is further configured to verify the encrypted payment identification code with a pre-obtained verification information; and the displaying module 708 is configured to display a verified payment identification code.

In an implementation, the payment information processing apparatus further includes an identity verifying module 712. The identity verifying module 712 is configured to obtain biometric information of a wearer of the wearable device; and verify an identity of the wearer according to the biometric information.

In an implementation, the identification-code generating module 702 is further configured to: obtain a current moment when the wearable device is in the network connection state, and generate through the first system at least one payment identification code when the current moment belongs to a preset time period.

In an implementation, the identification-code generating module 702 is further configured to generate through the first system at least one payment identification code according to a preset time interval when the wearable device is in the network connection state.

In an implementation, the identification-code generating module 702 is further configured to generate through the first system at least one payment identification code when a number of unused payment identification codes stored through the second system is less than a preset number and the wearable device is in the network connection state.

In an implementation, the identification-code obtaining module 706 is further configured to: obtain at least one of network information and power information of the wearable device upon receiving the payment request; and obtain the stored payment identification code from the second system upon determining, according to the at least one of network information and power information, that the wearable device meets the preset condition.

In an implementation, the identification-code obtaining module 706 is configured to obtain the stored payment identification code from the second system when the wearable device receives a payment request and at least one of: the wearable device is in an offline state, a network signal strength of the wearable device is less than a preset value, or remaining power of the wearable device is less than a first preset power threshold.

In an implementation, the payment information processing apparatus further includes a system switching module 714. The system switching module 714 is configured to obtain remaining power of the wearable device when the wearable device is under control of the first system; shut down the first system when the remaining power is less than a second preset power threshold and switch to be under control of the second system. The displaying module 708 is further configured to obtain through the second system the stored payment identification code when the wearable device is under control of the second system and receives a payment request, and display the payment identification code.

In an implementation, the displaying module 708 is configured to: generate through the first system the payment identification code, when the wearable device is in the network connection state and receives a payment request, and display the payment identification code.

In an implementation, the identification-code transmitting module 702 is further configured to transmit the payment identification code to the processor corresponding to the second system through a serial peripheral interface bus; and store by a memory corresponding to the second system the payment identification code.

The division of each module in the above payment information processing apparatus is only for illustration. In other implementations, the payment information processing apparatus may be divided into different modules as required to complete all or part of functions of the above payment information processing apparatus.

For the specific limitation of the payment information processing apparatus, reference can be made to the limitation of the payment information processing method above, which will not be repeated herein. Each module in the above payment information processing device can be implemented in whole or in part by software, hardware or a combination thereof. The above modules may be embedded in or independent from the processor of the wearable device in the form of hardware, or may be stored in the memory of the wearable device in the form of software, so as to be called by the processor to execute operations corresponding to the above modules.

Implementations of the present disclosure also provide a computer-readable storage medium, that is a non-volatile computer-readable storage medium comprising one or more computer-executed instructions. The instructions, when executed by one or more processors, cause the processors to execute operations of the payment information processing method.

A computer program product, when running on a computer, cause the computer to execute the payment information processing method.

A memory, storage, database, or other medium as used herein may include non-volatile and/or volatile memory. The non-volatile memory may include a read only memory (ROM), a programmable ROM (PROM), an electrically programmable ROM (EPROM), an electrically erasable programmable ROM (EEPROM), or flash memory. The volatile memory may include a random access memory (RAM), which is used as an external cache memory. For purpose of illustration and not limitation, RAM is available in various forms such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Rambus, a direct RAM (RDRAM), a direct Rambus DRAM (DRDRAM), and a Rambus dynamic RAM (RDRAM).

## Claims

1. A payment information processing method performed by a wearable device comprising a first system and a second system, the first system being different from the second system, the security of the second system being higher than that the security of the first system, and the method comprising:
connecting through the first system a payment platform for network communication and obtaining through the first system a payment identification code when the wearable device is in a network connection state, wherein in the network connection state, each of the first system and the second system is in a running state;
transmitting (204) the payment identification code to the second system and storing through the second system the payment identification code, the second system having no network connection function;
obtaining (206) the stored payment identification code from the second system when the wearable device is under control of the second system and receives a payment request, wherein when the wearable device is under control of the second system, only the second system is running; and
displaying (208) the payment identification code.

2. The method of claim 1, wherein storing through the second system the payment identification code comprises:
encrypting (304) through the second system the payment identification code and storing through the second system an encrypted payment identification code, wherein
displaying the payment identification code comprises:
verifying (308, 408) the encrypted payment identification code with pre-obtained verification information and displaying a verified payment identification code.

3. The method of claim 1, wherein before obtaining the stored payment identification code from the second system, the method further comprises:
obtaining (402) biometric information of a wearer of the wearable device;
verifying (404) an identity of the wearer according to the biometric information; and
proceeding (406) to obtaining the stored payment identification code from the second system once verification of the identity is passed.

4. The method of claim 1, wherein obtaining through the first system the payment identification code when the wearable device is in the network connection state comprises:
obtaining a current moment when the wearable device is in the network connection state, and generating through the first system at least one payment identification code when the current moment belongs to a preset time period; or
generating through the first system at least one payment identification code according to a preset time interval when the wearable device is in the network connection state; or,
generating through the first system at least one payment identification code when a number of unused payment identification codes stored through the second system is less than a preset number and the wearable device is in the network connection state.

5. The method of claim 1, further comprising:
obtaining at least one of network information and power information of the wearable device upon receiving the payment request; and
obtaining the stored payment identification code from the second system upon determining, according to the at least one of network information and power information, that the wearable device meets a preset condition.

6. The method of claim 5, wherein the preset condition comprises at least one of: the wearable device is in an offline state, a network signal strength of the wearable device is less than a preset value, or remaining power of the wearable device is less than a first preset power threshold.

7. The method of claim 1, further comprising:
obtaining remaining power of the wearable device when the wearable device is under control of the first system;
shutting down the first system when the remaining power is less than a second preset power threshold and switching to be under control of the second system;
obtaining through the second system the stored payment identification code when the wearable device is under control of the second system and receives a payment request, and displaying the payment identification code.

8. The method of claim 1, further comprising:
generating through the first system the payment identification code, when the wearable device is in the network connection state and receives the payment request, and displaying the payment identification code.

9. The method of any of claims 1 to 8, wherein a processor corresponding to the first system and a processor corresponding to the second system are connected through a serial peripheral interface bus, and wherein,
transmitting the payment identification code to the second system and storing through the second system the payment identification code comprises:
transmitting the payment identification code to the processor corresponding to the second system through the serial peripheral interface bus; and
storing by a memory corresponding to the second system the payment identification code.

10. The method of claim 1, wherein the wearable device comprises a first processor corresponding to the first system and a second processor corresponding to the second system.

11. The method of claim 1, wherein the wearable device is operable in at least two operating modes, and the at least two operating modes comprise a watch mode and a bracelet mode; and in the watch mode, the wearable device simultaneously operates the first system and the second system, and in the bracelet mode, the wearable device shuts down the first system and only operates the second system.

12. A wearable device, comprising a memory, a first processor, and a second processor, wherein the memory is configured to store a first computer program which, when executed by the first processor, is configured to cause the wearable device to operate a first system and store a second computer program which, when executed by the second processor, is configured to cause the wearable device to operate a second system, and the wearable device is configured to implement the method of any of claims 1 to 11.

13. A computer-readable storage medium for storing a computer program, wherein the computer program, when executed by a processor, is configured to implement the method of any of claims 1 to 11.

## Patentansprüche

1. Verfahren zur Verarbeitung von Zahlungsinformationen, das von einer tragbaren Vorrichtung durchgeführt wird, die ein erstes System und ein zweites System umfasst, wobei sich das erste System vom zweiten System unterscheidet, wobei die Sicherheit des zweiten Systems höher ist als diese die Sicherheit des ersten Systems, wobei das Verfahren umfasst:
Verbinden, über das erste System, mit einer Zahlungsplattform zur Netzwerkkommunikation und Erhalten, über das erste System, eines Zahlungsidentifikationscodes, wenn sich die tragbare Vorrichtung in einem Netzwerkverbindungszustand befindet, wobei sich im Netzwerkverbindungszustand jedes von dem ersten System und dem zweiten System in einem Betriebszustand befindet;
Übertragen (204) des Zahlungsidentifikationscodes an das zweite System und Speichern, über das zweite System, des Zahlungsidentifikationscodes, wobei das zweite System keine Netzwerkverbindungsfunktion aufweist;
Erhalten (206) des gespeicherten Zahlungsidentifikationscodes von dem zweiten System, wenn die tragbare Vorrichtung unter der Steuerung des zweiten Systems steht und eine Zahlungsanforderung empfängt, wobei, wenn die tragbare Vorrichtung unter der Steuerung des zweiten Systems steht, nur das zweite System läuft; und
Anzeigen (208) des Zahlungsidentifikationscodes.

2. Verfahren nach Anspruch 1, wobei das Speichern, über das zweite System, des Zahlungsidentifikationscodes umfasst:
Verschlüsseln (304), über das zweite System, des Zahlungsidentifikationscodes und Speichern, über das zweite System, eines verschlüsselten Zahlungsidentifikationscodes, wobei
das Anzeigen des Zahlungsidentifikationscodes umfasst:
Verifizieren (308, 408) des verschlüsselten Zahlungsidentifikationscodes mit vorab erhaltenen Verifizierungsinformationen und Anzeigen eines verifizierten Zahlungsidentifikationscodes.

3. Verfahren nach Anspruch 1, wobei das Verfahren vor dem Erhalten des gespeicherten Zahlungsidentifikationscodes von dem zweiten System ferner umfasst:
Erhalten (402) biometrischer Informationen eines Trägers der tragbaren Vorrichtung;
Verifizieren (404) einer Identität des Trägers anhand der biometrischen Informationen; und
Übergehen (406) zum Erhalten des gespeicherten Zahlungsidentifikationscodes von dem zweiten System, sobald die Verifizierung der Identität erfolgreich ist.

4. Verfahren nach Anspruch 1, wobei das Erhalten, über das erste System, des Zahlungsidentifikationscodes, wenn sich die tragbare Vorrichtung in dem Netzwerkverbindungszustand befindet, umfasst:
Erhalten eines aktuellen Zeitpunkts, wenn sich die tragbare Vorrichtung in dem Netzwerkverbindungszustand befindet, und Erzeugen, über das erste System, mindestens eines Zahlungsidentifikationscodes, wenn der aktuelle Zeitpunkt zu einer vorgegebenen Zeitperiode gehört; oder
Erzeugen, über das erste System, mindestens eines Zahlungsidentifikationscodes gemäß einem vorgegebenen Zeitintervall, wenn sich die tragbare Vorrichtung in dem Netzwerkverbindungszustand befindet; oder
Erzeugen, über das erste System, mindestens eines Zahlungsidentifikationscodes, wenn eine Anzahl von unbenutzten, über das zweite System gespeicherten Zahlungsidentifikationscodes kleiner ist als eine vorgegebene Anzahl und sich die tragbare Vorrichtung in dem Netzwerkverbindungszustand befindet.

5. Verfahren nach Anspruch 1, ferner umfassend:
Erhalten von mindestens einer von Netzwerkinformationen und Leistungsinformationen der tragbaren Vorrichtung bei Empfang der Zahlungsanforderung; und
Erhalten des gespeicherten Zahlungsidentifikationscodes von dem zweiten System bei der Feststellung, anhand der mindestens einen von Netzwerkinformationen und Leistungsinformationen, dass die tragbare Vorrichtung eine vorgegebene Bedingung erfüllt.

6. Verfahren nach Anspruch 5, wobei die vorgegebene Bedingung mindestens eine der folgenden umfasst: die tragbare Vorrichtung befindet sich in einem Offline-Zustand, eine Netzwerksignalstärke der tragbaren Vorrichtung ist geringer als ein vorgegebener Wert, oder eine verbleibende Leistung der tragbaren Vorrichtung ist geringer als ein erster vorgegebener Leistungsschwellenwert.

7. Verfahren nach Anspruch 1, ferner umfassend:
Erhalten der verbleibenden Leistung der tragbaren Vorrichtung, wenn die tragbare Vorrichtung unter der Steuerung des ersten Systems steht;
Herunterfahren des ersten Systems, wenn die verbleibende Leistung geringer ist als ein zweiter vorgegebener Leistungsschwellenwert, und Umschalten auf die Steuerung durch das zweite System;
Erhalten, über das zweite System, des gespeicherten Zahlungsidentifikationscodes, wenn die tragbare Vorrichtung unter der Steuerung des zweiten Systems steht und eine Zahlungsanforderung empfängt, und Anzeigen des Zahlungsidentifikationscodes.

8. Verfahren nach Anspruch 1, ferner umfassend:
Erzeugen, über das erste System, des Zahlungsidentifikationscodes, wenn sich die tragbare Vorrichtung in dem Netzwerkverbindungszustand befindet und die Zahlungsanforderung empfängt, und Anzeigen des Zahlungsidentifikationscodes.

9. Verfahren nach einem der Ansprüche 1 bis 8, wobei ein dem ersten System entsprechender Prozessor und ein dem zweiten System entsprechender Prozessor über einen seriellen Peripherieschnittstellenbus verbunden sind, und wobei
das Übertragen des Zahlungsidentifikationscodes an das zweite System und das Speichern, über das zweite System, des Zahlungsidentifikationscodes umfasst:
Übertragen des Zahlungsidentifikationscodes an den dem zweiten System entsprechenden Prozessor über den seriellen Peripherieschnittstellenbus; und
Speichern, durch einen dem zweiten System entsprechenden Speicher, des Zahlungsidentifikationscodes.

10. Verfahren nach Anspruch 1, wobei die tragbare Vorrichtung einen dem ersten System entsprechenden ersten Prozessor und einen dem zweiten System entsprechenden zweiten Prozessor umfasst.

11. Verfahren nach Anspruch 1, wobei die tragbare Vorrichtung in mindestens zwei Betriebsmodi betreibbar ist, und die mindestens zwei Betriebsmodi einen Uhrenmodus und einen Armbandmodus umfassen; und wobei im Uhrenmodus die tragbare Vorrichtung das erste System und das zweite System gleichzeitig betreibt, und wobei im Armbandmodus die tragbare Vorrichtung das erste System herunterfährt und nur das zweite System betreibt.

12. Tragbare Vorrichtung, umfassend einen Speicher, einen ersten Prozessor und einen zweiten Prozessor, wobei der Speicher konfiguriert ist, um ein erstes Computerprogramm zu speichern, das, wenn es von dem ersten Prozessor ausgeführt wird, konfiguriert ist, um die tragbare Vorrichtung zu veranlassen, ein erstes System zu betreiben, und um ein zweites Computerprogramm zu speichern, das, wenn es von dem zweiten Prozessor ausgeführt wird, konfiguriert ist, um die tragbare Vorrichtung zu veranlassen, ein zweites System zu betreiben, und wobei die tragbare Vorrichtung konfiguriert ist, um das Verfahren nach einem der Ansprüche 1 bis 11 durchzuführen.

13. Computerlesbares Speichermedium zum Speichern eines Computerprogramms, wobei das Computerprogramm, wenn es von einem Prozessor ausgeführt wird, konfiguriert ist, um das Verfahren nach einem der Ansprüche 1 bis 11 durchzuführen.

## Revendications

1. Procédé de traitement d'informations de paiement, mis en œuvre par un dispositif portable comprenant un premier système et un second système, le premier système étant différent du second système, la sécurité du second système étant supérieure à celle la sécurité du premier système, le procédé comprenant :
la connexion, par l'intermédiaire du premier système, à une plateforme de paiement pour une communication réseau, et l'obtention, par l'intermédiaire du premier système, d'un code d'identification de paiement lorsque le dispositif portable est dans un état de connexion réseau, dans lequel, dans l'état de connexion réseau, chacun du premier système et du second système est dans un état de fonctionnement ;
la transmission (204) du code d'identification de paiement au second système et le stockage, par l'intermédiaire du second système, du code d'identification de paiement, le second système n'ayant pas de fonction de connexion réseau ;
l'obtention (206) du code d'identification de paiement stocké à partir du second système lorsque le dispositif portable est sous le contrôle du second système et reçoit une demande de paiement, dans lequel, lorsque le dispositif portable est sous le contrôle du second système, seul le second système fonctionne ; et
l'affichage (208) du code d'identification de paiement.

2. Procédé selon la revendication 1, dans lequel le stockage, par l'intermédiaire du second système, du code d'identification de paiement comprend :
le chiffrement (304), par l'intermédiaire du second système, du code d'identification de paiement et le stockage, par l'intermédiaire du second système, d'un code d'identification de paiement chiffré, dans lequel
l'affichage du code d'identification de paiement comprend :
la vérification (308, 408) du code d'identification de paiement chiffré à l'aide d'informations de vérification préalablement obtenues et l'affichage d'un code d'identification de paiement vérifié.

3. Procédé selon la revendication 1, dans lequel, avant l'obtention du code d'identification de paiement stocké à partir du second système, le procédé comprend en outre :
l'obtention (402) d'informations biométriques d'un porteur du dispositif portable ;
la vérification (404) d'une identité du porteur en fonction des informations biométriques ; et
le passage (406) à l'obtention du code d'identification de paiement stocké à partir du second système une fois que la vérification de l'identité est réussie.

4. Procédé selon la revendication 1, dans lequel l'obtention, par l'intermédiaire du premier système, du code d'identification de paiement lorsque le dispositif portable est dans l'état de connexion réseau comprend :
l'obtention d'un instant courant lorsque le dispositif portable est dans l'état de connexion réseau, et la génération, par l'intermédiaire du premier système, d'au moins un code d'identification de paiement lorsque l'instant courant appartient à une période temporelle prédéfinie ; ou
la génération, par l'intermédiaire du premier système, d'au moins un code d'identification de paiement selon un intervalle de temps prédéfini lorsque le dispositif portable est dans l'état de connexion réseau ; ou,
la génération, par l'intermédiaire du premier système, d'au moins un code d'identification de paiement lorsqu'un nombre de codes d'identification de paiement non utilisés stockés par l'intermédiaire du second système est inférieur à un nombre prédéfini et que le dispositif portable est dans l'état de connexion réseau.

5. Procédé selon la revendication 1, comprenant en outre :
l'obtention d'au moins l'une des informations de réseau et informations de puissance du dispositif portable lors de la réception de la demande de paiement ; et
l'obtention du code d'identification de paiement stocké à partir du second système lors de la détermination, en fonction de l'au moins une des informations de réseau et informations de puissance, que le dispositif portable satisfait une condition prédéfinie.

6. Procédé selon la revendication 5, dans lequel la condition prédéfinie comprend au moins l'une des conditions suivantes : le dispositif portable est dans un état hors ligne, une intensité de signal réseau du dispositif portable est inférieure à une valeur prédéfinie, ou une puissance restante du dispositif portable est inférieure à un premier seuil de puissance prédéfini.

7. Procédé selon la revendication 1, comprenant en outre :
l'obtention de la puissance restante du dispositif portable lorsque le dispositif portable est sous le contrôle du premier système ;
l'arrêt du premier système lorsque la puissance restante est inférieure à un second seuil de puissance prédéfini et le passage sous le contrôle du second système ;
l'obtention, par l'intermédiaire du second système, du code d'identification de paiement stocké lorsque le dispositif portable est sous le contrôle du second système et reçoit une demande de paiement, et l'affichage du code d'identification de paiement.

8. Procédé selon la revendication 1, comprenant en outre :
la génération, par l'intermédiaire du premier système, du code d'identification de paiement, lorsque le dispositif portable est dans l'état de connexion réseau et reçoit la demande de paiement, et l'affichage du code d'identification de paiement.

9. Procédé selon l'une quelconque des revendications 1 à 8, dans lequel un processeur correspondant au premier système et un processeur correspondant au second système sont connectés par l'intermédiaire d'un bus d'interface périphérique série, et dans lequel,
la transmission du code d'identification de paiement au second système et le stockage, par l'intermédiaire du second système, du code d'identification de paiement comprennent :
la transmission du code d'identification de paiement au processeur correspondant au second système par l'intermédiaire du bus d'interface périphérique série ; et
le stockage, par une mémoire correspondant au second système, du code d'identification de paiement.

10. Procédé selon la revendication 1, dans lequel le dispositif portable comprend un premier processeur correspondant au premier système et un second processeur correspondant au second système.

11. Procédé selon la revendication 1, dans lequel le dispositif portable peut fonctionner dans au moins deux modes de fonctionnement, et les au moins deux modes de fonctionnement comprennent un mode montre et un mode bracelet ; et dans le mode montre, le dispositif portable fait fonctionner simultanément le premier système et le second système, et dans le mode bracelet, le dispositif portable arrête le premier système et ne fait fonctionner que le second système.

12. Dispositif portable, comprenant une mémoire, un premier processeur et un second processeur, dans lequel la mémoire est configurée pour stocker un premier programme d'ordinateur qui, lorsqu'il est exécuté par le premier processeur, est configuré pour amener le dispositif portable à faire fonctionner un premier système et pour stocker un second programme d'ordinateur qui, lorsqu'il est exécuté par le second processeur, est configuré pour amener le dispositif portable à faire fonctionner un second système, et le dispositif portable est configuré pour mettre en œuvre le procédé selon l'une quelconque des revendications 1 à 11.

13. Support de stockage lisible par ordinateur destiné à stocker un programme d'ordinateur, dans lequel le programme d'ordinateur, lorsqu'il est exécuté par un processeur, est configuré pour mettre en œuvre le procédé selon l'une quelconque des revendications 1 à 11.
